# EUROPEAN PATENT SPECIFICATION

(11) **EP 4 126 769 B1**
(45) Date of publication and mention of the grant of the patent: **11.11.2026**
(21) Application number: 21774474.7
(22) Date of filing: 26.03.2021
(51) Int. Cl.: C02F 1/52, B01D 19/00, B01D 21/01, B01D 9/00, C01B 25/45, C02F 1/58, C05B 19/00, C05G 5/12, C05B 7/00, C05B 1/04, C02F 1/00, C02F 103/20, C02F 101/16, C02F 101/10

(54) **PROCESS AND APPARATUS FOR SIZED NUTRIENT RECOVERY FROM WASTEWATER BY ELUTRIATION**
VERFAHREN UND VORRICHTUNG ZUR NÄHRSTOFF-GEWINNUNG IN GROSSEN MENGEN AUS ABWASSER DURCH ELUTRIATION
PROCÉDÉ ET APPAREIL POUR RÉCUPÉRATION DE NUTRIMENTS DIMENSIONNÉS D'EAU RÉSIDUAIRE PAR ÉLUTRIATION

(30) Priority: 27.03.2020 US 202016832507
(43) Date of publication of application: 08.02.2023
(73) Proprietor: Lobanov, Sergey, Vancouver, British Columbia V5Z 1R6 (CA)
(72) Inventor: Lobanov, Sergey, Vancouver, British Columbia V5Z 1R6 (CA)
(74) Representative: De Clercq & Partners
(86) International application number: PCT/CA2021/050395
(87) International publication number: WO 2021/189148

(56) References cited:
- WO-A1-2019/141460
- CN-A- 101 817 581
- CN-A- 106 430 506
- JP-A- H09 136 091
- US-A1- 2004 213 713
- US-A1- 2008 257 826
- US-B2- 10 266 433
- SHAYOK GHOSH, ,SERGEY LOBANOV, AND VICTOR K. LO: "Impact of supersaturation ratio on phosphorus recovery from synthetic anaerobic digester supernatant through a stntvite crystallization fluidized bed reactor", ENVIRONMENTAL TECHNOLOGY, vol. 40, no. 15, pages 2000 - 2020, XP055898313, DOI: 10.1080/09593330.2018.1435734

## Description

### FIELD

Innovations are disclosed in the field of aqueous chemistry, including processes and apparatus for removing dissolved species from wastewaters as sized precipitates.

### BACKGROUND

Dissolved phosphorus, nitrogen and potassium species are often discharged in wastewaters, particularly wastewaters of agricultural origin. This can have the deleterious effect of facilitating the aquatic growth of algae and other organisms, which in turn can lead to environmentally harmful eutrophication of natural water bodies. The converse component of this nutrient cycle involves the use of metered amounts of phosphorous, nitrogen and potassium species as fertilizers in agriculture. There is accordingly an unmet need for the effective recycling of nutrients from wastewaters to fertilizers.

A number of nutrient recovery technologies based on crystallization processes exist. Some of these technologies extract phosphorus and other nutrients as either struvite, calcium phosphate, or other sparingly soluble compounds in the form of fine crystals or powder. This causes issues with the separation of the recovered product from the wastewater and other suspended solids. Fine materials may be challenging and costly to dewater, dry, and handle. Many of the substances recovered as powders need further processing before they can be used as fertilizers. There accordingly remains a need for alternative processes for recovering valuable materials from wastewaters in a physical form that is convenient subsequent use.

Some sparingly soluble phosphate compounds such as struvite are effective slow-release fertilizers, due to relatively low solubility. This is in contrast to typical water soluble fertilizers, such as mono-ammonium and di-ammonium phosphates, which may only be partially absorbed by crops while a significant portion of such fertilizers may be washed out from the soil into the environment. Struvite dissolves very slowly, thereby ameliorating the loss of nutrients from the soil and providing effective nutrition to plants. The relatively low solubility of such fertilizers also helps to prevent the plant roots from being "burned" by the high salinity that can be caused by more water soluble fertilizers. Since many agricultural, municipal, and industrial wastewater streams contain high amounts of nutrients, particularly phosphorus and nitrogen, struvite has the potential to be recovered from these waste streams.

There are for example a number of processes for phosphorus recovery from waste streams in the form of struvite and other phosphate compounds. Many existing struvite recovery processes extract it in the form of small, powder-like particles that are very hard to dry and separate from impurities, which is a significant drawback for the final fertilizer product. Therefore, there is a need for a process that can produce a high quality struvite fertilizer product in the form of small granules, or pellets, that can be easily separated from the wastewater and other impurities, and can also be easily dried, transported and stored.

### SUMMARY

The invention relates to a process according to claim 1 and to a reactor system according to claim 14 for recovery of dissolved species from wastewater streams, in the form of sized precipitates. The process involves removing a dissolved species from an aqueous inflow stream, the dissolved species comprising a dissolved nitrogen and/or a dissolved phosphorous and/or a dissolved potassium species. The process includes steps of segregating the aqueous inflow into streams that are directed into a reactor, with a precipitating agent also being injected into the reactor. The precipitating agent is provided in a distinct material stream, e.g. as a solid or liquid.

The aqueous inflow stream is segregated into a plurality of reactor inflow streams, in a manifold in fluid communication with the reaction conduit. The plurality of reactor inflow streams are directed upwardly into the base of a reaction conduit segment in a reactor vessel so as to create a turbulent upward flow in the reaction conduit.

A precipitating agent is also injected into the base of the reaction conduit, under conditions maintained in the reaction conduit so as to provide a supersaturated concentration of a reaction product of the precipitating agent reacting with the dissolved species. The precipitating agent (e.g. either solid or liquid) may for example be, any one or more of: an alkali (caustic soda, caustic potash, lye, ammonia), a magnesium salt (such as MgCl₂, MgSO₄, MgO, Mg(OH)₂), magnesite, brucite, a combustion bottom ash or a fly ash.These reactor conditions are controlled so as to provide a desired saturation index for the reaction product, of at least 2 (optionally 2.0-3.0, optionally 2.5), the reaction product forming a solid precipitant species entrained in an upward reaction conduit fluid flow.

The upward reaction conduit fluid flow is then directed to a contiguous clarifier segment of the reactor. The upward reaction conduit fluid flow rate may for example be maintained between 20-80 cm/min, optionally at approximately 50 cm/min. The clarifier segment of the reactor is dimensioned to reduce the upward flow rate of the upward reaction conduit fluid flow. The clarifier may for example be a frustum shaped clarifier, for example where the frustum shaped clarifier comprises sloped walls having a slope angle of from about 45-85°, optionally from about 60-70°.

The upward clarified fluid flow rate is maintained in the clarifier so as to permit entrained solid precipitant species to descend in the clarifier segment of the reactor and return to the reaction conduit while a clarified discharge fluid flow continues to flow upwardly out of the clarifier segment of the reactor. The upward clarified fluid flow rate may for example be maintained between about 1-5 cm/min, optionally at about 2 cm/min. Conditions may for example be maintained in the reactor for substantial removal of the dissolved species from the aqueous inflow stream to provide the clarified discharge fluid, for example so that removal of dissolved species from the input to the discharge is at least 60%, 70%, 80% or 89%.

Conditions are maintained in the reactor to permit the progressive agglomeration of the precipitant species, so as to form agglomerated granules of a size and density sufficient to cause the agglomerated granules to settle towards the base of the reaction conduit, and it has surprisingly been demonstrated that conditions can be arranged so that this settling takes place in the presence of the turbulent upward reaction conduit fluid flow. The hydraulic retention time in the reaction conduit may for example be maintained between 1-10 min, optionally between 2-5 min.

An upward channeled fluid flow is injected into the reactor through a channel in fluid communication with the base of the reaction conduit. The channel is dimensioned to permit metering of the upward channeled fluid flow so as to permit agglomerated granules of a selected size and density to descend through the channel, while returning un-selected precipitant species upwardly to the reaction conduit. The upward channeled fluid flow rate may for example be maintained at about 10%, optionally in a range of 5-50%, of the upward reaction conduit fluid flow rate.

The channel may for example be dimensioned to have an average channel cross-sectional area *C*_{Xarea}, while the pellet hopper similarly has an average pellet hopper cross sectional area *PH*_{Xarea} and the reaction conduit also has an average conduit cross sectional area *RC*_{Xarea}: and those dimensions may be arranged so that *C*_{Xarea} < *PH*_{Xarea} , and *C*_{Xarea} < *RC*_{Xarea}.

In this way, a sized solid granule product is segregated by elutriation, and this product accordingly descends through the channel. This sized product is collected into a contiguous pellet hopper, sized to accommodate a settled volume of the sized solid granule product. In select implementations, the process may involve periodically restricting the upward channeled fluid flow in the channel and downwardly releasing the contents of the pellet hopper, to collect the desired solid granule product. The sized solid granule product may for example be collected on a sieve, and may be washed on the sieve, and may then be dried. The sized solid granule product may for example have an average product size, and the average product size may for example be from about 1-2 mm. The granule product may for example have a desired product purity, for example of at least about 60%, 70%, 80%, 90% or 96%.

The desired solid granule product may for example be one or more of: struvite, K-struvite, calcium ammonium phosphate CaNH₄PO₄, and/or hydroxyapatite Ca₅(PO₄)₃(OH), brushite CaHPO₄·2H₂O, newberyite MgHPO₄·3H₂O, and/or magnesium phosphate Mg₃(PO₄)₂. In select alternative embodiments, the purity of the desired solid granule product may for example be at least 70%, 75%, 80%, 90% or 95%.

In one aspect, processes may involve recirculating a portion of the clarified fluid flow from the clarifier to the hopper, using this recirculated fluid flow to mediate the upward channeled fluid flow through the channel. An upward hopper fluid flow in the hopper may for example be provided that mediates the upward channeled fluid flow in the channel, and the hopper may be sized so that the upward hopper fluid flow is less than the upward channeled fluid flow.

One aspect of select implementations of the present processes is the ability to cope with inflow streams that have relatively high levels suspended solids. For example, the inflow stream may include up to 1%, 2%, 3%, 4% or 5% by weight suspended solids. In some embodiments, from 50-95% of the suspended solids in the inflow stream pass through the reactor to the clarified discharge fluid flow.

The present processes are carried out in a reactor with a system of controls, constituting a reactor system operable to remove the dissolved species from the aqueous inflow stream (the dissolved species comprising a dissolved nitrogen and/or a dissolved phosphorous and/or a dissolved potassium species). One or more screens may be positioned in the aqueous inflow stream, before the aqueous inflow stream enters the manifold, and these screens may for example have a smaller mesh than the diameter of injection nozzles positioned inside the reactor.

The reactor system includes the manifold for segregating the aqueous inflow stream into a plurality of reactor inflow streams, and directing the plurality of reactor inflow streams upwardly into the base of the reaction conduit segment in the reactor vessel, so as to create a turbulent upward flow in the reaction conduit. An intake pump may for example be located upstream of the manifold, to provide a pressurized aqueous inflow stream. A precipitating agent inlet port is provided in fluid communication with the base of the reaction conduit, adapted for injecting the precipitating agent into the base of the reaction conduit, under the control of reactor system controls adapted to maintain conditions in the reaction conduit so as to provide a supersaturated concentration of the reaction product of the precipitating agent reacting with the dissolved species. The precipitating agent is dosed in close proximity to injection nozzles that direct the input fluid into the reactor. In this way, a saturation index may be maintained for the reaction product, as described above, of at least 2. The reaction product accordingly forms a solid precipitant species entrained in an upward reaction conduit fluid flow.

The clarifier segment of the reactor, upwardly contiguous with the reaction segment, is dimensioned relative to the reaction segment so as to reduce an upward flow rate of an upward reaction conduit fluid flow directed into the clarifier from the reaction segment, under the control of clarifier system controls operable to maintain an upward clarified fluid flow rate in the clarifier so as to permit entrained solid precipitant species to descend in the clarifier segment of the reactor and return to the reaction conduit while a clarified discharge fluid flow continues to flow upwardly out of the clarifier segment of the reactor. A jacket may be provided on the clarifier, configured to collect the clarified discharge fluid flow.

The reactor system controls are operable to maintain conditions in the reactor to permit the progressive agglomeration of the precipitant species to form agglomerated granules of a size and density sufficient to cause the agglomerated granules to settle towards the base of the reaction conduit in the presence of the turbulent upward reaction conduit fluid flow.

The channel in fluid communication with the base of the reaction conduit is connected to a channel fluid source to provide an upward channeled fluid flow through the channel into the base of the reaction conduit. The channel is dimensioned to permit metering of the upward channeled fluid flow so as to permit agglomerated granules of a selected size and density to descend through the channel while returning un-selected precipitant species upwardly to the reaction conduit, thereby segregating a sized solid granule product by elutriation that descends through the channel into a contiguous pellet hopper sized to accommodate a settled volume of sized solid granule product.

Injection nozzles are provided directing the plurality of reactor inflow streams upwardly into the base of the reaction conduit. The injection nozzles are elevated above the bottom portion of the reaction conduit. There may for example be at least 2, 3, 4, 5 or 6 injection nozzles. The injection nozzles may be generally evenly distributed throughout a cross-sectional area at the base of the reaction conduit, In select embodiments, a superficial upflow velocity may be maintained inside each nozzle of between 5-15 m/s, or about 10 m/s.

### BRIEF DESCRIPTION OF THE DRAWINGS

**Figure 1** is a schematic elevational illustration of an apparatus for carrying out processes disclosed herein.
**Figure 2** is a schematic elevational illustration of an alternative apparatus for carrying out processes disclosed herein.

### DETAILED DESCRIPTION

Processes and apparatus are disclosed for recovery of dissolved species from wastewater streams, in the form of precipitates sized by elutriation. In some embodiments, the recovered solids may for example be plant nutrients. The extracted nutrients may for example include solid species of phosphorus (P), and/or nitrogen (N) and/or potassium (K). The processes may be carried out on a wide range of aqueous feeds, for example from wastewater streams of various origins, such as agricultural (manure), municipal (sewage), or other industrial origin.

The nutrients are extracted through the process of crystallization of phosphate containing sparingly soluble compounds. Such compounds may for example include, but are not limited to, struvite (magnesium ammonium phosphate, MAP), K-struvite (magnesium potassium phosphate, MKP), and other sparingly soluble phosphate compounds. In one aspect of the processes, the nutrients transition from the aqueous liquid (e.g. wastewater) into the solids (e.g. crystals) as a result of creating supersaturation in the wastewater of a reaction product of a precipitant and a dissolved species, i.e. the compound to be extracted from the aqueous inflow stream. Conditions of supersaturation thereby triggering the crystallization process. The supersaturation is created by adding a precipitating agent (or agents) to the wastewater. The solid materials obtained during the precipitation process are then separated from the liquid.

Processes disclosed herein provide for nutrient recovery from wastewater in forms in which the extracted compounds may be provided as relatively large spherical granules (pellets). These granules generally represent agglomerates of smaller crystals produced in a crystallization apparatus (reactor). As disclosed here, the chemical and hydrodynamic conditions inside the reactor are controlled in such a way that the rate of crystal agglomeration is relatively high. This results in the fast growth of the granules and allows for more efficient extraction of nutrients from wastewater. At the same time, it has been demonstrated that the present processes may be controlled so that the granules can be grown large enough to be separated from the wastewater and other suspended solids. In select embodiments, the present processes thereby facilitate recovery of a high purity product from liquid streams, and this may for example be accomplished with inflow streams having relatively high amounts of suspended solids, for example up to 2%, 3%, 4%, 5%, 6%, 7%, 8%, 9%, or 10% by weight, or in an alternative embodiment up to 5% by weight suspended solids. In select embodiments, the relatively high efficiency of the present treatment processes allows for a smaller plant footprint and facilitates economical energy consumption.

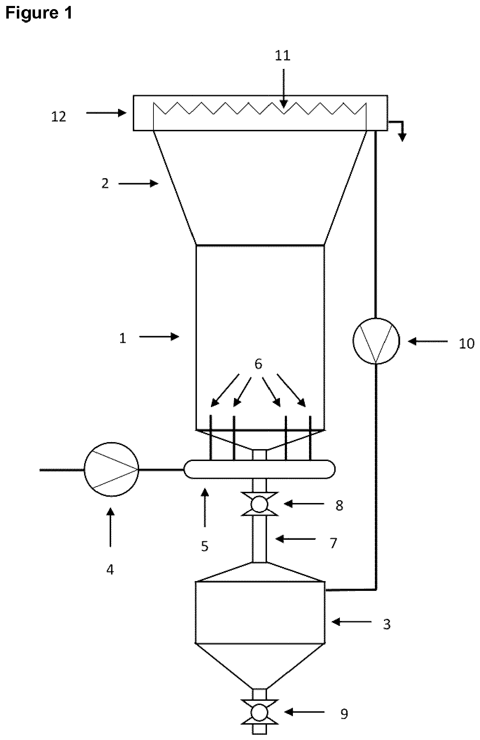

In an illustrated embodiment, there are two main components of an apparatus used to implement the present processes: the crystallization reactor and the wastewater injection system. The crystallization reactor, as illustrated, is an upright, fluidized-bed reactor, shown in **Figure 1****.** The reactor consists of the three main parts: the reaction conduit (1), the clarifier (2), and the pellet hopper (3). The clarifier is contiguous with and directly adjacent to the reaction conduit and is located above it. The cross-sectional area of the clarifier, in the illustrated embodiment, is gradually increasing from the bottom to the top; hence, the clarifier is shaped in the form of a frustum. The cross-sectional profile of the reaction conduit and the clarifier may for example be round, rectangular, or polygonal. The top of the clarifier may be open, and the bottom of the reaction conduit is closed except where various input ports are located. A pellet hopper (3) may be located below the reaction conduit, providing a container for the bulk pellets of the recovered product; it may advantageously taper downwardly so as to facilitate discharge of recovered product at the bottom of the hopper. The top of the pellet hopper is connected to the bottom of the reaction conduit through a vertical pipe or any other channel, which may, as illustrated, have a cross-sectional area substantially smaller than that of the pellet hopper as well as of the reaction conduit.

The presently disclosed apparatus facilitates a particular wastewater injection process. As illustrated, the injection system consists of one or more sets of the following: the pump (4), the manifold (5), and the injection nozzles (6). Each set is available for a separate wastewater stream to be treated in the apparatus. This may be particularly advantageous where distinct wastewater streams should not be mixed with each other before the treatment process. In each set, the pump conveys the wastewater to be treated into the manifold hereby generating elevated pressure inside of it. The manifold (5) may for example be adapted to distribute the wastewater generally equally among the nozzles (6) that are connected to it. The nozzle outlets are located at the bottom or base of the reaction conduit (1). They are directed substantially upward and slightly elevated above the surface of the bottom of the reaction conduit. The total number of the nozzles from all the injection sets may for example be at least 3; the nozzles may be evenly distributed throughout the cross-sectional area of the reaction conduit at the bottom.

In the illustrated apparatus, the wastewater is injected into the reactor at the bottom of the reaction conduit (1) through the nozzles (6) in such manner that the superficial upflow velocity inside each nozzle is between 5-15 m/s, preferably 10 m/s. This creates a number of jets directed substantially upward; the jets generate highly turbulent flow at the bottom of the reaction conduit. The size (or diameter) of the nozzles depends on their number and the flow rate of the wastewater and can be determined by anyone skilled in the art. The nozzles (6) typically have round cross-sectional area, but may also be rectangular, polygonal, etc. Before entering the manifold, the wastewater stream may pass through an optional screen in order to separate any particulate material that is larger than the size (diameter) of the nozzles in order to prevent possible nozzle plugging.

The reactor as illustrated operates in a continuous upflow mode. While in operation, all parts of the reactor may be filled with the crystals of the compound being extracted from the wastewater; various parts of the reactor contain crystals of different sizes. As described above, the wastewater to be treated is injected into the reaction conduit (1) from the bottom through the injection nozzles (6). At the same time, a precipitating agent (or agents) is dosed in a close proximity to the injection nozzles (6) at the bottom of the reaction conduit (1) where it is instantly mixed with the wastewater thus creating the chemical condition of supersaturation.

The precipitating agent is typically a substance that decreases the solubility of the extracted substance in wastewater. For example, if the extracted substance is struvite the precipitating agents can be an alkali, a magnesium salt, or any combination thereof. The agent may be injected through one or more inlet ports, installed vertically, horizontally, or at an angle. The precipitating agent can for example be either a liquid or a slurry; it may be continuously dosed in a controlled manner using metering pumps, pH controllers, etc., to maintain a specific level of supersaturation in the reaction conduit with respect to the compound to be extracted from the wastewater.

In select embodiments, pH values may be controlled in the reactor, for example being maintained to achieve a desired saturation index. Similarly, temperatures in the reactor may be controlled, again with the prospect of setting temperatures in the reactor so as to achieve a desired saturation index. In select embodiments, where struvite is a desired product, reactor pH may for example be controlled to be between 7-10, and a prospective temperature range would for example be 10-40°C, or alternatively up to 60°C.

Supersaturation triggers the formation of crystals inside the reactor and promotes their growth and agglomeration. The crystals remain suspended in the liquid upflow in all sections of the reactor. As the crystals form, the nutrients are extracted from the liquid phase. Conditions may be maintained so that relatively small crystals then settle downwardly in the clarifier (2) and return to the reaction conduit while a clarified wastewater flows out of the top portion of the clarifier, conditions may also be arranged so that suspended solids originally present in the inflow stream also pass out of the top portion of the clarifier. The reactor effluent accordingly contains significantly reduced amounts of nutrients and represents a treated wastewater stream. At the same time, crystals agglomerate inside the reaction conduit (1), which surprisingly is facilitated by the turbulent flow generated by the jets, and thereby form granules, or pellets (which may for example be generally spherical). It has been discovered, as shown in the Examples herein, that conditions may be arranged so that the pellets that have grown to a desired or selected size settle down to the bottom of the reaction conduit (1) and then further down into the pellet hopper (3).

The pellet hopper (3) facilitates continuous separation of the pellets from the agglomerates and the crystals that have not yet achieved the desired size and are therefore not selected to be extracted from the reactor (the "un-selected" precipitants). At the same time, continuous removal of the pellets from the reaction conduit (1) prevents crystal overpopulation at the bottom of the conduit which could have a potentially negative effect on the process.

Separation of the pellets is achieved through the principle of elutriation. As described above, the bottom of the reaction conduit (1) is connected to the top of the pellet hopper (3) through a pipe or a channel (7), which may be a tube with a cross-sectional area smaller than that of both the reaction conduit and the pellet hopper. The cross-sectional area of the channel (7) may for example be round, rectangular, or polygonal. An upflow of a liquid, i.e. an upward channeled fluid flow, is generated in the channel which is opposite to the direction of the pellet settling. The upflow is maintained such that it enables the larger pellets to sink down or be suspended in it, while the smaller pellets and other crystals are carried upwards with the upflow back into the reaction conduit. The larger particles eventually settle down into the pellet hopper (3) where they no longer remain suspended since the hopper has a larger cross-sectional area than that of the channel (7) and hence the upflow velocity is no longer high enough to keep the pellets suspended.

Pellets are periodically discharged from the pellet hopper (3) by isolating it from the reaction conduit using a shutoff valve (8) while simultaneously opening a discharge valve (9) at the bottom of the pellet hopper (3). The pellets can be discharged on a sieve where the liquid along with any suspended solids in it easily drains through the pellets retaining on the sieve. After unloading the pellets from the hopper, the discharge valve (9) is closed, the hopper is filled with the liquid, after which the shutoff valve (8) is opened again so that the next batch of the pellets can be collected. The pellet hopper (3) typically has a large capacity to be able to contain large volume of bulk pellets to avoid the need for frequent discharge. The pellets on the sieve can be washed with water to remove any impurities from their surface and then dried in the air, in an oven at low temperatures, or by any other means known in the art. The fertilizer pellets represent a final product that is ready for the market with no need for any further processing. In select embodiments, the purity of the final fertilizer product may for example be over 50%, 55%, 60%, 65%, 70%, 75%, 80%, 85%, 90% or 95%.

The liquid upflow in the channel (7) that connects the pellet hopper (3) with the reaction conduit (1) may for example be achieved by pumping a portion of the reactor effluent from the clarifier (2) into the pellet hopper using an additional pump (10). Using the reactor effluent has the advantage of keeping the pellets in the mother liquor hereby preventing their dissolution as well as maintaining the volume of the wastewater constant which would otherwise be increased should an additional external liquid be used for that purpose. Control of the upflow velocity in the channel (7) allows for selective separation of a certain pellet size and maintaining the desired crystal size distribution of the harvested pellets. The cross-sectional area and the flow rate through the channel (7) may for example be chosen such that it does not significantly affect the desired hydrodynamic and chemical conditions inside the reaction conduit (1). The flow rate may for example be maintained at about 10% of the total flow rate in the reaction conduit.

In one aspect of the present processes, the process is performed while maintaining a specific, relatively constant level of initial supersaturation with respect to the extracted compound in the reaction conduit (1). This operational parameter is advantageous for controlling the process efficiency. The supersaturation may for example be maintained by means of controlling the flow rate of the precipitating agent (agents). Alternatively, in embodiments where more than one wastewater stream is treated in the apparatus, the supersaturation may for example be maintained by controlling the mixing ratio of the wastewater streams.

Herein, supersaturation of a liquid with respect to a substance is expressed as the saturation index SI, which is the common logarithm of the ratio between the activity product of the ionic species that constitute the substance and the thermodynamic solubility product of the substance. For example, for struvite (magnesium ammonium phosphate, MgNH₄PO₄·6H₂O), SI would be expressed as: $SI = {log}_{10} \frac{\left\{{Mg}^{2 +}\right\} ⋅ \left\{{NH}_{4}^{+}\right\} ⋅ \left\{{PO}_{4}^{3 -}\right\}}{{K}_{sp \left(struvite\right)}}$
where: {Mg²⁺}, {NH₄⁺}, {PO₄³⁻} are activities respectively of magnesium, ammonium, and orthophosphate ions; and,
K_{sp (struvite)} is the thermodynamic solubility product of struvite.

The saturation index may be determined by using this formula as part of the control systems of the present processes. Activities of the relevant ionic species can either be measured directly, or derived mathematically from the measured concentrations of the relevant ionic species, by using standard analytical methods. Activity coefficients of the species, as well as solubility product of the extracted compound, will be obtainable from widely available literature sources.

The initial saturation index SI at the bottom of the reaction conduit (1) with respect to the extracted compound may for example be maintained in the range of 2.0-3.0, optionally 2.5. This saturation index along with the highly turbulent flow in the reaction conduit has surprisingly be found to cause a high rate of crystal nucleation. At the same time, it also provides a surprisingly high crystal agglomeration rate, so that the newly formed small crystals can rapidly agglomerate into larger granules (pellets). By establishing and maintaining such conditions where the rate of crystal agglomeration is higher or equal to the rate of crystal formation, the number of small crystals can be reduced, and the number and size of larger agglomerates can be increased. This allows for the control of crystal size distribution and population density within the reactor, and, eventually, for a rapid formation of large granules of the extracted compound. In addition to that, it has been found that the specific hydrodynamic and chemical conditions in the reaction conduit (1) may be selected so as to facilitate the affinity of the crystals to each other rather than to other suspended solids present in the wastewater stream. This has been shown to result in a high purity extracted compound, relatively free of contamination by solid impurities in the wastewater. In select embodiments, the present processes have been found to be capable of treating liquid streams with as high as 2% of total suspended solids without substantially compromising the quality of the recovered fertilizer product.

The implementation of processes having the above saturation index has been found to provide for relatively low residual concentrations of nutrients in the reactor effluent, putatively by allowing the chemical reaction to be substantially completed before the wastewater stream leaves the reactor. In select implementations, once the reaction takes place in the reaction conduit (1), the saturation index rapidly decreases to a level of 0.1-1.0. This may accordingly hinder the formation of new crystals and instead facilitate the growth of the existing ones. This condition may be orchestrated to take place in the upper section of the reaction conduit. In particular, it has been found that conditions may be provided so that large pellets generally settle down to the bottom of the reaction conduit, while some of the much smaller crystals remain suspended throughout its volume. As soon as the crystals grow large enough so that they no longer remain suspended by the upflow, they settle down into the bottom portion of the reaction conduit to be agglomerated into pellets.

In select embodiments, in order to facilitate the settling of the small and medium-size crystals, the superficial upflow velocity in the reaction conduit (1) may for example be maintained between 20-80 cm/min, or approximately 50 cm/min. Hydraulic retention time in the reaction conduit may for example be maintained between 1-10 min, or between 2-5 min, where these conditions provide sufficient time for the chemical reaction to be substantially completed. The physical dimensions of the reaction conduit (1) may be designed based on these requirements.

Crystals that are too small to remain in the reaction conduit (1), as well as suspended solids originally present in the wastewater, are carried by the upflow into the clarifier (2). In the illustrated embodiment, the clarifier has a gradually increasing cross-sectional area which gradually reduces the upflow velocity of the fluid in it, i.e. the upward clarified fluid flow. As a result, in select embodiments crystals as small as 50 micron can for example be retained inside the reactor without any substantial loss of the extracted compound with the effluent. In order to retain the crystals inside the clarifier (2) the superficial upflow velocity at the top of the clarifier may for example be maintained between 1-5 cm/min, optionally at approximately 2 cm/min. The slope angle of the clarifier frustum in select embodiments may for example be between 45-85°, optionally between 60-70°. The physical dimensions of the clarifier (2) may for example be designed based on these requirements. In the exemplified embodiment, the frustum shape of the clarifier, along with the bulk crystals settling down from the clarifier opposite to the flow, generate minor turbulence at the point of attachment between the clarifier and the reaction conduit (1). This may further serve to promote the growth of the existing crystals in preference to generating new ones. Implementing the foregoing conditions, the clarifier (2) may be made to contain a suspended bed of small crystals. This bed is generally dynamic, as it continuously exchanges crystals with the reaction conduit (1): the crystals that grow large enough settle down, whereas some of the freshly formed fine crystals are carried up with the flow. Consequently, the bed serves as a "filter" that catches the fine crystals and prevents them from escaping the reactor. At the same time, the suspended solids that are originally present in the wastewater stream typically have much smaller size and lower density than the crystals. As a result, they can freely pass through the bed and be carried away from the clarifier by the effluent flow, hereby preventing their accumulation in the clarifier (2). The constant volume of the bed can be controlled by the initial saturation index and the hydrodynamic conditions at the bottom of the reaction conduit. Precise control over the operational parameters prevents the bed from overflowing and losing the fine crystals with the effluent. The top of the clarifier can optionally have an overflow weir (11), as shown in **Figure 1****,** for uniform distribution of the outflow over a wide surface area to minimize resuspension of settled crystals. The effluent from the reactor will then overflow into an external clarifier (12) designed as a jacket of the reactor clarifier. The jacket (12) can further minimize the loss of the fine crystals with the effluent.

### EXAMPLES

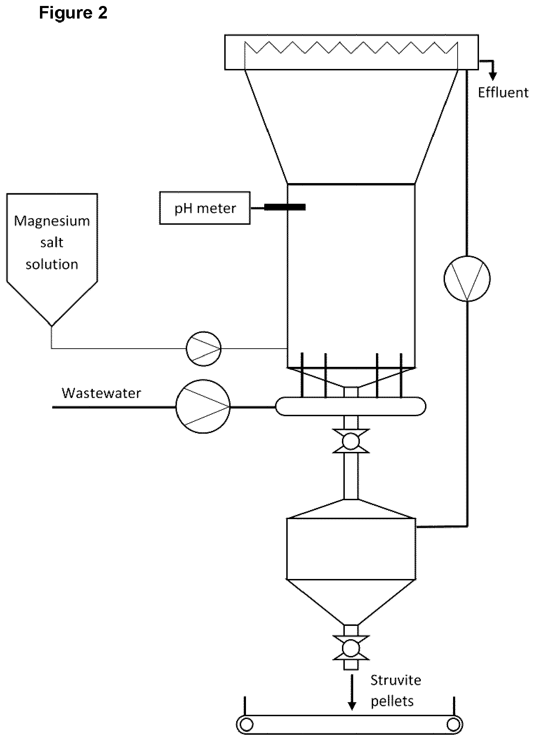

The exemplified process was performed in the apparatus as shown in **Figure 2****.** The wastewater stream to be treated was an anaerobically digested chicken manure which had undergone a solid separation process. The wastewater had the following characteristics, on average: total suspended solids - 2.0%; pH - 8.4; conductivity - 18 mS/cm; alkalinity - 30,000 mg/L as CaCO₃; soluble orthophosphate P-PO₄- 205 mg/L; soluble ammonia nitrogen N-NH₃- 5050 mg/L; soluble magnesium Mg - 5 mg/L; soluble calcium Ca - 50 mg/L. The wastewater was continuously pumped from a storage tank into the manifold by a pump at the average flow rate of 200 m³/day. Before entering the manifold, the wastewater passes through a screen with 5 mm openings. The differential pressure in the manifold is maintained at 0.1 MPa. The manifold distributes the wastewater between 4 identical round nozzles. The superficial upflow velocity inside each nozzle was maintained at 9 m/s.

The wastewater enters a cylindrical reaction conduit where it is instantly mixed with a precipitating agent which is dosed at the bottom of the reaction conduit. The precipitating agent is a concentrated solution of a water-soluble magnesium salt. The salt solution is continuously dosed by a metering pump in a controlled manner that provides the molar ratio between soluble magnesium and soluble orthophosphate in the reaction conduit of about 1. Once the agent is mixed with the wastewater the reaction between magnesium, ammonia and orthophosphate takes place essentially immediately and crystals of struvite form in the reaction conduit. The initial saturation index of struvite in the reaction conduit is about 2.3. The superficial upflow velocity in the reaction conduit was 47 cm/min. The pH value at the top of the reaction conduit was monitored by a pH meter which indicated a value of around 8.3. The superficial upflow velocity at the top of the clarifier was 5 cm/min. The clarifier had an overflow weir and a jacket. The treated wastewater (effluent) overflows into the jacket and leaves the reactor through a port installed in the jacket.

The effluent had the following concentrations, on average: soluble orthophosphate P-PO₄- 22 mg/L; soluble ammonia nitrogen N-NH₃- 4800 mg/L; soluble magnesium Mg - 14 mg/L; soluble calcium Ca - 48 mg/L. The removal efficiency of the soluble orthophosphate was accordingly 89%. A portion of the effluent from the jacket is pumped by the additional pump into the pellet hopper at the flow rate of 23 m³/day. The pellets of struvite formed in the reaction conduit continuously settle down into the pellet hopper through a vertical pipe. The superficial upflow velocity in the pipe was maintained at 415 cm/min. This upflow velocity enabled the separation of the struvite pellets larger than 1 mm in size from the rest of the crystals in the reaction conduit. The pellets were drained from the pellet hopper once every 2 days by closing the shutoff valve between the reaction conduit and the pellet hopper and opening the discharge valve at the bottom of the pellet hopper. The pellets along with the liquid were discharged into a container with a sieve at its bottom. The sieve opening size was 0.5 mm. The liquid drained through the sieve while the struvite pellets remained on it. The pellets were then rinsed with clean water and dried in the open air. The weight of dry struvite crystals extracted with each harvest was about 500 kg. The struvite pellet size ranged between 1-2 mm. The purity of the struvite product is about 96%.

### REFERENCES

Ghosh, S., Lobanov, S., Lo, V.K. (2019) Impact of supersaturation ratio on phosphorus recovery from synthetic anaerobic digester supernatant through a struvite crystallization fluidized bed reactor. Environmental Technology, 40(15), 2000-2010.
Ghosh, S., Lobanov, S., Lo, V.K. (2019) An overview of technologies to recover phosphorus as struvite from wastewater: advantages and shortcomings. Environmental Science and Pollution Research, 26(19), 19063-19077.
Peng, L., Dai, H., Wu, Y., Peng, Y., Lu, X. (2018) A comprehensive review of phosphorus recovery from wastewater by crystallization processes. Chemosphere, 197, 768-781.
US10266433 (2019)
US8999007 (2015)
US7922897 (2011)
US7622047 (2009)
US7005072 (2006)
US6994782 (2006)
US2012003135 (2012)
US4389317 (1983)
US3869381 (1975)
FR2962433 (2012)
US8017019 (2011)
CN209242807U (2019)
CN107445266A (2017)
CN106512465A (2017)
CN106430506A (2017)
CN206255878U (2017)
CN204298122U (2015)
CN104129769A (2014)
CN103935974A (2014)
WO2017194997 (2017)
KR20170014793A (2017)
EP3112320A1 (2017)
ES2455740 (2014)
JP4505878B2 (2010)
JP3883222B2 (2007)
JP3649471B2 (2005)
JP3344132B2 (2002)
JPH11267665A (1999)
JP2576679B2 (1997)
US4946653 (1990)

Citation of references herein is not an admission that such references are prior art to the present invention. Although various embodiments of the invention are disclosed herein, many adaptations and modifications may be made within the scope of the invention defined in the claims. Terms such as "exemplary" or "exemplified" are used herein to mean "serving as an example, instance, or illustration." Any implementation described herein as "exemplary" or "exemplified" is accordingly not to be construed as necessarily preferred or advantageous over other implementations, all such implementations being independent embodiments. Unless otherwise stated, numeric ranges are inclusive of the numbers defining the range, and numbers are necessarily approximations to the given decimal. The word "comprising" is used herein as an open-ended term, substantially equivalent to the phrase "including, but not limited to", and the word "comprises" has a corresponding meaning. As used herein, the singular forms "a", "an" and "the" include plural referents unless the context clearly dictates otherwise. Thus, for example, reference to "a thing" includes more than one such thing. The invention includes all embodiments and variations substantially as hereinbefore described and with reference to the examples and drawings.

## Claims

1. A process for removing a dissolved species from an aqueous inflow stream, the dissolved species comprising a dissolved nitrogen and/or a dissolved phosphorous and/or a dissolved potassium species, the process comprising:
segregating the aqueous inflow stream into a plurality of reactor inflow streams in a manifold in fluid communication with a reaction conduit segment, and directing the plurality of reactor inflow streams upwardly into a base of a reaction conduit segment in a reactor vessel so as to create a turbulent upward flow in the reaction conduit segment;
injecting a precipitating agent into the base of the reaction conduit segment under conditions maintained in the reaction conduit segment so as to provide a supersaturated concentration of a reaction product of the precipitating agent reacting with the dissolved species, providing a saturation index of at least 2 for the reaction product, the reaction product forming a solid precipitant species entrained in an upward reaction conduit fluid flow;
directing the upward reaction conduit fluid flow to a contiguous clarifier segment of the reactor vessel, the clarifier segment of the reactor vessel being dimensioned to reduce the upward flow rate of the upward reaction conduit fluid flow, and maintaining an upward clarified fluid flow rate in the clarifier segment so as to permit entrained solid precipitant species to descend in the clarifier segment of the reactor vessel and return to the reaction conduit segment while a clarified discharge fluid flow continues to flow upwardly out of the clarifier segment of the reactor vessel;
maintaining conditions in the reactor vessel to permit a progressive agglomeration of the precipitant species to form agglomerated granules of a size and density sufficient to cause the agglomerated granules to settle towards the base of the reaction conduit segment in the presence of the turbulent upward reaction conduit fluid flow;
injecting an upward channeled fluid flow through a channel in fluid communication with the base of the reaction conduit segment, the channel being dimensioned to permit metering of the upward channeled fluid flow so as to permit agglomerated granules of a selected size and density to descend through the channel while returning un-selected precipitant species upwardly to the reaction conduit segment, thereby segregating a sized solid granule product by elutriation that descends through the channel into a contiguous pellet hopper sized to accommodate a settled volume of the sized solid granule product.

2. The process of claim 1, further comprising periodically restricting the upward channeled fluid flow in the channel and downwardly releasing the contents of the hopper, to collect the sized solid granule product.

3. The process of claim 1 or 2, further comprising recirculating a portion of the clarified fluid flow from the clarifier segment to the hopper to mediate the upward channeled fluid flow through the channel.

4. The process of any one of claims 1 to 3, further comprising providing an upward hopper fluid flow in the hopper that mediates the upward channeled fluid flow in the channel, and sizing the hopper so that the upward hopper fluid flow is less than the upward channeled fluid flow.

5. The process of any one of claims 1 to 4, wherein:
- the precipitating agent comprises an alkali, a magnesium salt, MgCl₂, MgSO₄, MgO, Mg(OH)₂, magnesite, brucite, a combustion bottom ash or a fly ash; and/or
- the sized solid granule product comprises one or more of: struvite, K-struvite, calcium ammonium phosphate CaNH₄PO₄, and/or hydroxyapatite Cas(PO₄)₃(OH), brushite CaHPO₄·2H₂O, newberyite MgHPO₄·3H₂O, and/or magnesium phosphate Mg₃(PO₄)₂; and/or
- the sized solid granule product has an average product size, and the average product size is from about 1-2 mm; and/or
- the sized solid granule product has a product purity of at least about 60%, 70%, 75%, 80%, 90%, 95% or 96%.

6. The process of any one of claims 1 to 5, wherein the inflow stream comprises up to 1%, 2%, 3%, 4% or 5% by weight suspended solids, optionally wherein 50-95% of the suspended solids in the inflow stream pass through the reactor vessel to the clarified discharge fluid flow.

7. The process of any one of claims 1 to 6, wherein the channel has an average channel cross-sectional area *C*_{Xarea}, the pellet hopper has an average pellet hopper cross sectional area *PH*_{Xarea} and the reaction conduit segment has an average conduit cross sectional area *RC*xarea, wherein *C*_{Xarea} < *PH*_{Xarea}, and *C*_{Xarea} < *RC*xarea.

8. The process of any one of claims 1 to 7, further comprising collecting the sized solid granule product on a sieve; optionally further washing the sized solid granule product on the sieve; optionally drying the sized solid granule product on the sieve.

9. The process of any one of claims 1 to 8, wherein:
- the upward channeled fluid flow rate is maintained at about 10%, optionally in a range of 5-50%, of the upward reaction conduit fluid flow rate; and/or
- the upward reaction conduit fluid flow rate is maintained between 20-80 cm/min, optionally approximately 50 cm/min; and/or
- a hydraulic retention time in the reaction conduit segment is maintained between 1-10 min, optionally between 2-5 min; and/or
- the upward clarified fluid flow rate is maintained between about 1-5 cm/min, optionally at about 2 cm/min.

10. The process of any one of claims 1 to 9, wherein the initial saturation index SI at the base of the reaction conduit segment for the reaction product is maintained in the range of 2.0-3.0, optionally at about 2.5.

11. The process of any one of claims 1 to 10, wherein the clarifier segment is a frustum shaped clarifier, optionally where the frustum shaped clarifier comprises sloped walls having a slope angle of from about 45-85°, optionally from about 60-70°.

12. The process of any one of claims 1 to 11, wherein the removal of one or more of the dissolved species from the aqueous inflow stream to provide the clarified discharge fluid flow is at least 60%, 70%, 80% or 89%.

13. A reactor system operable to remove a dissolved species from an aqueous inflow stream, the dissolved species comprising a dissolved nitrogen and/or a dissolved phosphorous and/or a dissolved potassium species, the reactor system comprising:
a manifold (5) for segregating an aqueous inflow stream into a plurality of reactor inflow streams, and for directing the plurality of reactor inflow streams upwardly into a base of a reaction conduit segment (1) in a reactor vessel in fluid communication with the manifold, so as to create a turbulent upward flow in the reaction conduit segment;
injection nozzles (6) for directing the plurality of reactor inflow streams upwardly into the base of the reaction conduit; wherein the injection nozzles are elevated above a bottom portion of the reaction conduit;
a precipitating agent inlet port in fluid communication with the base of the reaction conduit segment, adapted for injecting a precipitating agent into the base of the reaction conduit segment in close proximity to the injection nozzles under control of reactor system controls adapted to maintain conditions in the reaction conduit segment so as to provide a supersaturated concentration of a reaction product of the precipitating agent reacting with the dissolved species and so as to provide a saturation index of at least 2 for the reaction product, so that the reaction product forms a solid precipitant species entrained in an upward reaction conduit fluid flow;
a clarifier segment (2) of the reactor vessel, upwardly contiguous with the reaction conduit segment, the clarifier segment of the reactor vessel being dimensioned relative to the reaction segment so as to reduce an upward flow rate of an upward reaction conduit fluid flow directed into the clarifier segment from the reaction conduit segment, under the control of clarifier system controls operable to maintain an upward clarified fluid flow rate in the clarifier segment so as to permit entrained solid precipitant species to descend in the clarifier segment of the reactor vessel and return to the reaction conduit segment while a clarified discharge fluid flow continues to flow upwardly out of the clarifier segment of the reactor vessel;
wherein the reactor system controls are operable to maintain conditions in the reactor vessel to permit a progressive agglomeration of the precipitant species to form agglomerated granules of a size and density sufficient to cause the agglomerated granules to settle towards the base of the reaction conduit segment in the presence of the turbulent upward reaction conduit fluid flow; and
a channel (7) in fluid communication with the base of the reaction conduit segment having a channel fluid source to provide an upward channeled fluid flow through the channel into the base of the reaction conduit segment, the channel being dimensioned to permit metering of the upward channeled fluid flow so as to permit agglomerated granules of a selected size and density to descend through the channel while returning un-selected precipitant species upwardly to the reaction conduit segment, thereby segregating a sized solid granule product by elutriation that descends through the channel into a contiguous pellet hopper (3) sized to accommodate a settled volume of sized solid granule product.

14. The reactor system of claim 13, further comprising one or more of:
- an intake pump (4) upstream of the manifold to provide a pressurized aqueous inflow stream;
- a jacket (12) on the clarifier configured to collect the clarified discharge fluid flow;
- optionally wherein there are at least 2, 3, 4, 5 or 6 injection nozzles; optionally wherein the injection nozzles are generally evenly distributed throughout a cross-sectional area at the base of the reaction conduit;
- a screen positioned in the aqueous inflow stream before the aqueous inflow stream enters the manifold; optionally, wherein the screen has a smaller mesh than the diameter of the injection nozzles.

## Patentansprüche

1. Verfahren zum Entfernen einer gelösten Spezies aus einem wässrigen Zuflussstrom, wobei die gelöste Spezies eine gelöste Stickstoff- und/oder eine gelöste Phosphor- und/oder eine gelöste Kaliumspezies umfasst, wobei das Verfahren Folgendes umfasst:
Trennen des wässrigen Zuflussstroms in eine Mehrzahl von Reaktorzuflussströmen in einem Verteiler in Fluidverbindung mit einem Reaktionsleitungssegment und Lenken der Mehrzahl von Reaktorzuflussströmen aufwärts in eine Basis eines Reaktionsleitungssegments in einem Reaktorbehälter, um einen turbulente Aufwärtsfluss in dem Reaktionsleitungssegment zu erzeugen;
Einspritzen eines Fällmittels in die Basis des Reaktionsleitungssegments unter derartigen Bedingungen, die in dem Reaktionsleitungssegment aufrechterhalten werden, dass eine übersättigte Konzentration eines Reaktionsprodukts des Fällmittels bereitgestellt wird, das mit der gelösten Spezies reagiert, wobei ein Sättigungsindex von mindestens 2 für das Reaktionsprodukt bereitgestellt wird, wobei das Reaktionsprodukt eine feste Fällungsmittelspezies bildet, die in einem Aufwärtsfluidfluss in der Reaktionsleitung mitgerissen wird;
Lenken des Aufwärtsfluidflusses in der Reaktionsleitung zu einem angrenzenden Klärersegment des Reaktorbehälters, wobei das Klärersegment des Reaktorbehälters derart dimensioniert ist, dass die Aufwärtsdurchflussrate des Aufwärtsfluidflusses in der Reaktionsleitung verringert wird, und Aufrechterhalten einer Aufwärtsdurchflussrate eines geklärten Fluids in dem Klärersegment, die es ermöglicht, dass mitgerissene feste Fällungsmittelspezies in dem Klärersegment des Reaktorbehälters absinken und zu dem Reaktionsleitungssegment zurückgeführt werden, während ein geklärter Auslassfluidfluss weiterhin aufwärts aus dem Klärersegment des Reaktorbehälters fließt;
Aufrechterhalten von derartigen Bedingungen in dem Reaktorbehälter, dass eine progressive Agglomeration der Fällungsmittelspezies ermöglicht wird, um agglomeriertes Granulat mit einer Größe und Dichte zu bilden, die ausreichend sind, um zu bewirken, dass sich das agglomerierte Granulat in Gegenwart des turbulenten Aufwärtsfluidflusses in der Reaktionsleitung in Richtung der Basis des Reaktionsleitungssegments absetzt;
Einspritzen eines aufwärts geleiteten Fluidflusses durch einen Kanal in Fluidverbindung mit der Basis des Reaktionsleitungssegments, wobei der Kanal derart dimensioniert ist, dass er eine Dosierung des aufwärts geleiteten Fluidflusses ermöglicht, die es ermöglicht,
dass agglomeriertes Granulat mit einer ausgewählten Größe und Dichte durch den Kanal absinkt, während nicht ausgewählte Fällungsmittelspezies aufwärts zu dem Reaktionsleitungssegment zurückgeführt werden, wodurch ein bemessenes, festes Granulatprodukt durch Schlämmen abgetrennt wird, das durch den Kanal in einen angrenzenden Pellettrichter absinkt, der derart bemessen ist, dass er ein abgesetztes Volumen des bemessenen, festen Granulatprodukts aufnimmt.

2. Verfahren nach Anspruch 1, ferner umfassend das periodische Einschränken des aufwärts geleiteten Fluidflusses in dem Kanal und das abwärts gerichtete Freigeben des Inhalts des Trichters, um das bemessene, feste Granulatprodukt zu sammeln.

3. Verfahren nach Anspruch 1 oder 2, ferner umfassend das Rezirkulieren eines Teils des geklärten Fluidflusses von dem Klärersegment zu dem Trichter, um den aufwärts geleiteten Fluidfluss durch den Kanal zu vermitteln.

4. Verfahren nach einem der Ansprüche 1 bis 3, ferner umfassend das Bereitstellen eines aufwärts gerichteten Trichterfluidflusses in dem Trichter, der den aufwärts geleiteten Fluidfluss in dem Kanal vermittelt, und das Bemessen des Trichters derart, dass der aufwärts gerichtete Trichterfluidfluss kleiner als der aufwärts geleitete Fluidfluss ist.

5. Verfahren nach einem der Ansprüche 1 bis 4, wobei:
- das Fällmittel ein Alkali, ein Magnesiumsalz, MgCl₂, MgSO₄, MgO, Mg(OH)₂, Magnesit, Brucit, eine Verbrennungsbodenasche oder eine Flugasche umfasst; und/oder
- das bemessene, feste Granulatprodukt eines oder mehrere der Folgenden umfasst: Struvit, K-Struvit, Calciumammoniumphosphat CaNH₄PO₄ und/oder Hydroxylapatit Ca₅(PO₄)₃(OH), Brushit CaHPO₄·2H₂O, Newberyit MgHPO₄·3H₂O und/oder Magnesiumphosphat Mg₃(PO₄)₂; und/oder
- das bemessene, feste Granulatprodukt eine durchschnittliche Produktgröße aufweist und die durchschnittliche Produktgröße etwa 1-2 mm beträgt; und/oder
- das bemessene, feste Granulatprodukt eine Produktreinheit von mindestens etwa 60 %, 70 %, 75 %, 80 %, 90 %, 95 % oder 96 % aufweist.

6. Verfahren nach einem der Ansprüche 1 bis 5,
wobei der Zuflussstrom bis zu 1 Gew.-%, 2 Gew.-%, 3 Gew.-%, 4 Gew.-% oder 5 Gew.-% suspendierte Feststoffe umfasst, wobei gegebenenfalls 50-95 % der suspendierten Feststoffe in dem Zuflussstrom durch das Reaktorgefäß in den geklärten Auslassfluidfluss gelangen.

7. Verfahren nach einem der Ansprüche 1 bis 6,
wobei der Kanal eine durchschnittliche Kanalquerschnittsfläche Cxₐᵣₑₐ aufweist, der Pellettrichter eine durchschnittliche Pellettrichterquerschnittsfläche PHxₐᵣₑₐ aufweist und das Reaktionsleitungssegment eine durchschnittliche Leitungsquerschnittsfläche RCxₐᵣₑₐ aufweist, wobei Cxₐᵣₑₐ < PHxₐᵣₑₐ und Cxₐᵣₑₐ < RCxₐᵣₑₐ.

8. Verfahren nach einem der Ansprüche 1 bis 7, ferner umfassend das Sammeln des bemessenen, festen Granulatprodukts auf einem Sieb; ferner gegebenenfalls das Waschen des bemessenen, festen Granulatprodukts auf dem Sieb; gegebenenfalls das Trocknen des bemessenen, festen Granulatprodukts auf dem Sieb.

9. Verfahren nach einem der Ansprüche 1 bis 8, wobei:
- die Durchflussrate des aufwärts geleiteten Fluids bei etwa 10 %, gegebenenfalls in einem Bereich von 5-50 %, der Durchflussrate des Aufwärtsfluidflusses in der Reaktionsleitung gehalten wird; und/oder
- die Durchflussrate des Aufwärtsfluidflusses in der Reaktionsleitung zwischen 20-80 cm/min, gegebenenfalls bei etwa 50 cm/min, gehalten wird; und/oder
- eine Hydraulikretentionszeit in dem Reaktionsleitungssegment zwischen 1-10 min, gegebenenfalls zwischen 2-5 min, gehalten wird; und/oder
- die Aufwärtsdurchflussrate eines geklärten Fluids zwischen etwa 1-5 cm/min, gegebenenfalls bei etwa 2 cm/min, gehalten wird.

10. Verfahren nach einem der Ansprüche 1 bis 9, wobei der anfängliche Sättigungsindex SI an der Basis des Reaktionsleitungssegments für das Reaktionsprodukt im Bereich von 2,0-3,0, gegebenenfalls bei etwa 2,5, gehalten wird.

11. Verfahren nach einem der Ansprüche 1 bis 10, wobei das Klärersegment ein stumpfförmiger Klärer ist, wobei der stumpfförmige Klärer gegebenenfalls geneigte Wände mit einem Neigungswinkel von etwa 45-85°, gegebenenfalls von etwa 60-70°, umfasst.

12. Verfahren nach einem der Ansprüche 1 bis 11,
wobei das Entfernen einer oder mehrerer der gelösten Spezies aus dem wässrigen Zuflussstrom, um den geklärten Auslassfluidfluss bereitzustellen, mindestens 60 %, 70 %, 80 % oder 89 % beträgt.

13. Reaktorsystem, das derart betreibbar ist, dass eine gelöste Spezies aus einem wässrigen Zuflussstrom entfernt wird, wobei die gelöste Spezies eine gelöste Stickstoff- und/oder eine gelöste Phosphor- und/oder eine gelöste Kaliumspezies umfasst, wobei das Reaktorsystem Folgendes umfasst:
einen Verteiler (5) zum Trennen eines wässrigen Zuflussstroms in eine Mehrzahl von Reaktorzuflussströmen und zum Lenken der Mehrzahl von Reaktorzuflussströmen aufwärts in eine Basis eines Reaktionsleitungssegments (1) in einem Reaktorgefäß in Fluidverbindung mit dem Verteiler, um eine turbulente Aufwärtsströmung in dem Reaktionsleitungssegment zu erzeugen;
Einspritzdüsen (6) zum Lenken der Mehrzahl von Reaktorzuflussströmen aufwärts in die Basis der Reaktionsleitung; wobei die Einspritzdüsen über einen Bodenabschnitt der Reaktionsleitung angehoben sind;
einen Fällmitteleinlassanschluss in Fluidverbindung mit der Basis des Reaktionsleitungssegments, der dazu geeignet ist, ein Fällmittel in die Basis des Reaktionsleitungssegments in unmittelbarer Nähe zu den Einspritzdüsen unter Steuerung von Reaktorsystemsteuerungen einzuspritzen, die dazu geeignet sind, derartige Bedingungen in dem Reaktionsleitungssegment aufrechtzuerhalten, dass eine übersättigte Konzentration eines Reaktionsprodukts des Fällmittels bereitgestellt wird, das mit der gelösten Spezies reagiert, und dass ein Sättigungsindex von mindestens 2 für das Reaktionsprodukt bereitgestellt wird, sodass das Reaktionsprodukt eine feste Fällungsmittelspezies bildet, die in einem Aufwärtsfluidfluss in der Reaktionsleitung mitgerissen wird;
ein Klärersegment (2) des Reaktorbehälters, das aufwärts an das Reaktionsleitungssegment angrenzt, wobei das Klärersegment des Reaktorbehälters in Bezug auf das Reaktionssegment derart dimensioniert ist, dass eine Aufwärtsdurchflussrate eines Aufwärtsfluidflusses in der Reaktionsleitung, der von dem Reaktionsleitungssegment in das Klärersegment gelenkt wird, reduziert wird, unter der Steuerung von Klärersystemsteuerungen, die derart betreibbar sind, dass eine Aufwärtsdurchflussrate eines geklärten Fluids in dem Klärersegment aufrechterhalten wird, die ermöglicht, dass mitgerissene feste Fällungsmittelspezies in dem Klärersegment des Reaktorbehälters absinken und zu dem Reaktionsleitungssegment zurückkehren, während ein geklärter Auslassfluidfluss weiterhin aufwärts aus dem Klärersegment des Reaktorbehälters fließt;
wobei die Reaktorsystemsteuerungen derart betreibbar sind, dass die Bedingungen in dem Reaktorbehälter aufrechterhalten werden, um zu ermöglichen, dass eine progressive Agglomeration der Fällungsmittelspezies agglomeriertes Granulat mit einer Größe und Dichte bildet, die ausreichend sind, um zu bewirken, dass sich das agglomerierte Granulat in Gegenwart des turbulenten Aufwärtsfluidflusses in der Reaktionsleitung in Richtung der Basis des Reaktionsleitungssegments absetzt; und
einen Kanal (7) in Fluidverbindung mit der Basis des Reaktionsleitungssegments mit einer Kanalfluidquelle, um einen aufwärts geleiteten Fluidfluss durch den Kanal in die Basis des Reaktionsleitungssegments bereitzustellen, wobei der Kanal derart dimensioniert ist, dass eine Dosierung des aufwärts geleiteten Fluidflusses ermöglicht wird, um zu ermöglichen, dass agglomeriertes Granulat mit einer ausgewählten Größe und Dichte durch den Kanal absinkt, während nicht ausgewählte Fällungsmittelspezies aufwärts zu dem Reaktionsleitungssegment zurückgeführt werden, wodurch durch Schlämmen ein bemessenes, festes Granulatprodukt abgetrennt wird, das durch den Kanal in einen angrenzenden Pellettrichter (3) absinkt, der derart bemessen ist, dass er ein abgesetztes Volumen des bemessenen, festen Granulatprodukts aufnimmt.

14. Reaktorsystem nach Anspruch 13, ferner umfassend eines oder mehrere der Folgenden:
- eine Ansaugpumpe (4) stromaufwärts des Verteilers, um einen mit Druck beaufschlagten wässrigen Zuflussstrom bereitzustellen;
- einen Mantel (12) an dem Klärer, der dazu ausgelegt ist, den geklärten Auslassfluidfluss zu sammeln;
- wobei gegebenenfalls mindestens 2, 3, 4, 5 oder 6 Einspritzdüsen vorhanden sind; wobei gegebenenfalls die Einspritzdüsen im Allgemeinen gleichmäßig über eine Querschnittsfläche an der Basis der Reaktionsleitung verteilt sind;
- ein Sieb, das in dem wässrigen Zuflussstrom angeordnet ist, bevor der wässrige Zuflussstrom in den Verteiler eintritt; wobei gegebenenfalls das Sieb ein kleineres Netz als den Durchmesser der Einspritzdüsen aufweist.

## Revendications

1. Procédé d'élimination d'une espèce dissoute d'un flux d'entrée aqueux, les espèces dissoutes comprenant une espèce d'azote dissoute et/ou une espèce de phosphore dissoute et/ou une espèce de potassium dissoute, le procédé comprenant :
séparer le flux d'entrée aqueux en une pluralité de flux d'entrée de réacteur dans un collecteur en communication fluidique avec un segment de conduit de réaction, et diriger la pluralité de flux d'entrée de réacteur vers le haut dans une base d'un segment de conduit de réaction dans une cuve de réacteur de manière à créer un écoulement ascendant turbulent dans le segment de conduit de réaction ;
injecter un agent précipitant dans la base du segment de conduit de réaction dans des conditions maintenues dans le segment de conduit de réaction de manière à fournir une concentration sursaturée d'un produit de réaction de l'agent précipitant réagissant avec les espèces dissoutes, fournissant un indice de saturation d'au moins 2 pour le produit de réaction, le produit de réaction formant une espèce de précipitant solide entraînée dans un écoulement de fluide ascendant de conduit de réaction ;
diriger l'écoulement de fluide ascendant de conduit de réaction vers un segment de clarificateur contigu de la cuve du réacteur, le segment de clarificateur de la cuve du réacteur étant dimensionné pour réduire le débit ascendant de l'écoulement de fluide ascendant de conduit de réaction, et maintenir un débit de fluide clarifié ascendant dans le segment de clarificateur de manière à permettre aux espèces de précipitant solide entraînées de descendre dans le segment de clarificateur de la cuve du réacteur et de revenir au segment de conduit de réaction tandis qu'un écoulement de fluide de décharge clarifié continue de s'écouler vers le haut hors du segment de clarificateur de la cuve du réacteur ;
maintenir des conditions dans la cuve du réacteur pour permettre une agglomération progressive des espèces de précipitant afin de former des granules agglomérés d'une taille et d'une densité suffisantes pour amener les granules agglomérés à se décanter vers la base du segment de conduit de réaction en présence de l'écoulement de fluide ascendant turbulent de conduit de réaction ;
injecter un écoulement de fluide canalisé ascendant à travers un canal en communication fluidique avec la base du segment de conduit de réaction, le canal étant dimensionné pour permettre le dosage de l'écoulement de fluide canalisé ascendant de manière à permettre aux granules agglomérés d'une taille et d'une densité choisies de descendre à travers le canal tout en renvoyant vers le haut des espèces de précipitant non sélectionnées vers le segment de conduit de réaction, réalisant ainsi une ségrégation d'un produit granulé solide dimensionné par élutriation qui descend à travers le canal dans une trémie contiguë à pastilles dimensionnée pour recevoir un volume décanté du produit granulé solide dimensionné.

2. Procédé selon la revendication 1, comprenant en outre la restriction de manière périodique de l'écoulement de fluide canalisé vers le haut dans le canal et la libération vers le bas du contenu de la trémie, pour recueillir le produit granulé solide dimensionné.

3. Procédé selon la revendication 1 ou 2, comprenant en outre la recirculation d'une partie de l'écoulement de fluide clarifié depuis le segment de clarificateur vers la trémie pour médier l'écoulement de fluide canalisé vers le haut à travers le canal.

4. Procédé selon l'une quelconque des revendications 1 à 3, comprenant en outre la fourniture d'un écoulement de fluide de trémie vers le haut dans la trémie qui médie l'écoulement de fluide canalisé vers le haut dans le canal, et le dimensionnement de la trémie de sorte que l'écoulement de fluide de trémie vers le haut soit inférieur à l'écoulement de fluide canalisé vers le haut.

5. Procédé selon l'une quelconque des revendications 1 à 4, dans lequel :
- l'agent précipitant comprend un alcali, un sel de magnésium, MgCl₂, MgSO₄, MgO, Mg(OH)₂, la magnésite, la brucite, des cendres de fond de combustion ou des cendres volantes ; et/ou
- le produit granulé solide dimensionné comprend l'un ou plusieurs parmi : struvite, K-struvite, phosphate de calcium et d'ammonium CaNH₄PO₄, et/ou hydroxyapatite Ca₅(PO₄)₃(OH), brushite CaHPO₄·2H₂O, newbéryite MgHPO₄·3H₂O, et/ou phosphate de magnésium Mg₃(PO₄)₂ ; et/ou
- le produit granulé solide dimensionné possède une taille moyenne de produit, et la taille moyenne de produit est d'environ 1-2 mm ; et/ou
- le produit granulé solide dimensionné a une pureté de produit d'au moins environ 60 %, 70 %, 75 %, 80 %, 90 %, 95 % ou 96 %.

6. Procédé selon l'une quelconque des revendications 1 à 5,
dans lequel le flux d'entrée comprend jusqu'à 1 %, 2 %, 3 %, 4 % ou 5 % en poids de solides en suspension, éventuellement dans lequel 50-95 % des solides en suspension dans le flux d'entrée passent à travers la cuve du réacteur vers le flux de fluide de décharge clarifié.

7. Procédé selon l'une quelconque des revendications 1 à 6,
dans lequel le canal a une surface moyenne de section transversale de canal Cx_{surface}, la trémie à pastilles a une surface moyenne de section transversale de trémie à pastilles PHx_{surface} et le segment de conduit de réaction a une surface moyenne de section transversale de conduit RCx_{surface}, dans lequel Cx_{surface} < PHx_{surface}, et Cx_{surface} < RCx_{surface}.

8. Procédé selon l'une quelconque des revendications 1 à 7, comprenant en outre la collecte du produit granulé solide dimensionné sur un tamis ; facultativement en outre un lavage du produit granulé solide dimensionné sur le tamis ; facultativement un séchage du produit granulé solide dimensionné sur le tamis.

9. Procédé selon l'une quelconque des revendications 1 à 8, dans lequel :
- le débit de fluide canalisé vers le haut est maintenu à environ 10 %, éventuellement dans une plage de 5-50 %, du débit de fluide du conduit de réaction vers le haut ; et/ou
- le débit de fluide du conduit de réaction vers le haut est maintenu entre 20-80 cm/min, éventuellement environ 50 cm/min ; et/ou
- un temps de rétention hydraulique dans le segment de conduit de réaction est maintenu entre 1-10 min, optionnellement entre 2-5 min ; et/ou
- le débit de fluide clarifié vers le haut est maintenu entre environ 1-5 cm/min, éventuellement à environ 2 cm/min.

10. Procédé selon l'une quelconque des revendications 1 à 9, dans lequel l'indice de saturation initial SI au niveau de la base du segment de conduit de réaction pour le produit de réaction est maintenu dans la plage de 2,0 à 3,0, facultativement à environ 2,5.

11. Procédé selon l'une quelconque des revendications 1 à 10, dans lequel le segment de clarificateur est un clarificateur en forme de tronc de cône, facultativement où le clarificateur en forme de tronc de cône comprend des parois inclinées ayant un angle d'inclinaison d'environ 45-85°, facultativement d'environ 60-70°.

12. Procédé selon l'une quelconque des revendications 1 à 11,
dans lequel l'élimination d'une ou plusieurs des espèces dissoutes du flux d'entrée aqueux pour produire l'écoulement de fluide de décharge clarifié est d'au moins 60 %, 70 %, 80 % ou 89 %.

13. Système de réacteur pouvant être exploité pour éliminer une espèce dissoute d'un flux d'entrée aqueux, les espèces dissoutes comprenant une espèce d'azote dissoute et/ou une espèce de phosphore dissoute et/ou une espèce de potassium dissoute, le système de réacteur comprenant :
un collecteur (5) permettant de réaliser une ségrégation d'un flux d'entrée aqueux en une pluralité de flux d'entrée de réacteur, et de diriger la pluralité de flux d'entrée de réacteur vers le haut dans une base d'un segment de conduit de réaction (1) dans une cuve de réacteur en communication fluidique avec le collecteur, de manière à créer un écoulement ascendant turbulent dans le segment de conduit de réaction ;
des buses d'injection (6) pour diriger la pluralité de flux d'entrée du réacteur vers le haut dans la base du conduit de réaction ; dans lequel les buses d'injection sont élevées au-dessus d'une partie inférieure du conduit de réaction ;
un port d'entrée d'agent précipitant en communication fluidique avec la base du segment de conduit de réaction, adapté pour injecter un agent précipitant dans la base du segment de conduit de réaction à proximité immédiate des buses d'injection sous le commandement de commandes du système de réacteur adaptées pour maintenir des conditions dans le segment de conduit de réaction afin de fournir une concentration sursaturée d'un produit de réaction de l'agent précipitant réagissant avec les espèces dissoutes et de fournir un indice de saturation d'au moins 2 pour le produit de réaction, de sorte que le produit de la réaction forme une espèce de précipitant solide entraînée dans un écoulement de fluide ascendant du conduit de réaction ;
un segment de clarificateur (2) de la cuve du réacteur, contigu vers le haut avec le segment de conduit de réaction, le segment de clarificateur de la cuve du réacteur étant dimensionné par rapport au segment de réaction de manière à réduire un débit ascendant d'un écoulement de fluide ascendant de conduit de réaction dirigé dans le segment de clarificateur à partir du segment de conduit de réaction, sous le commandement de commandes du système de clarificateur pouvant être exploité pour maintenir un débit de fluide clarifié ascendant dans le segment de clarificateur, de manière à permettre aux espèces de précipitant solides entraînées de descendre dans le segment de clarificateur de la cuve du réacteur et de revenir au segment de conduit de réaction tandis qu'un écoulement de fluide de décharge clarifié continue de s'écouler vers le haut hors du segment de clarificateur de la cuve du réacteur ;
dans lequel les commandes du système de réacteur peuvent être exploitées pour maintenir des conditions dans la cuve du réacteur afin de permettre une agglomération progressive des espèces de précipitant pour former des granules agglomérés d'une taille et d'une densité suffisantes pour amener les granules agglomérés à se décanter vers la base du segment de conduit de réaction en présence de l'écoulement turbulent de fluide de conduit de réaction ascendant ; et
un canal (7) en communication fluidique avec la base du segment de conduit de réaction ayant une source de fluide de canal pour fournir un écoulement de fluide canalisé vers le haut à travers le canal dans la base du segment de conduit de réaction, le canal étant dimensionné pour permettre le dosage de l'écoulement de fluide canalisé vers le haut de manière à permettre aux granules agglomérés d'une taille et d'une densité choisies de descendre à travers le canal tout en renvoyant vers le haut des espèces de précipitant non sélectionnées vers le segment de conduit de réaction, réalisant ainsi une ségrégation d'un produit granulé solide dimensionné par élutriation qui descend à travers le canal dans une trémie à pastilles contiguë (3) dimensionnée pour recevoir un volume décanté de produit granulé solide dimensionné.

14. Système de réacteur selon la revendication 13, comprenant en outre une ou plusieurs parmi :
- une pompe d'admission (4) en amont du collecteur pour fournir un flux d'entrée aqueux sous pression ;
- une double enveloppe (12) sur le clarificateur configurée pour collecter le flux de fluide de décharge clarifié ;
- optionnellement dans lequel il y a au moins 2, 3, 4, 5 ou 6 buses d'injection ; optionnellement dans lequel les buses d'injection sont généralement réparties régulièrement sur toute l'étendue d'une surface de section transversale au niveau de la base du conduit de réaction ;
- une grille positionnée dans le flux d'entrée aqueux avant que le flux d'entrée aqueux ne pénètre dans le collecteur ; optionnellement, la grille possédant une maille plus petite que le diamètre des buses d'injection.
